# EUROPÄISCHE PATENTANMELDUNG

(11) **EP 1 289 321 A2**
(43) Veröffentlichungstag der Anmeldung: **05.03.2003**
(21) Anmeldenummer: 02016034.7
(22) Anmeldetag: 18.07.2002
(51) Int. Cl.: H04Q 7/22, H04M 3/53

(54) **Verfahren zur Meldung von in einem Kommunikationsendgerät eingehenden Daten**

(30) Priorität: 28.08.2001 DE 10142013
(71) Anmelder: SIEMENS AKTIENGESELLSCHAFT, 80333 München (DE)
(72) Erfinder: Berauer, Sven, 82515 Wolfratshausen (DE); Buekers, Albert, 48629 Metelen (DE)

(57) **Zusammenfassung**

Bei dem erfindungsgemäßen Verfahren sowie Kommunikationsendgerät zur Meldung von in einem ersten Kommunikationsendgerät eingehenden Daten werden abhängig von der Herkunft der Daten zumindest Teile der Daten mit Hilfe eines Dienstes zur Übermittlung von Kurznachrichten an ein zweites Kommunikationsendgerät übermittelt, wobei in dem ersten Kommunikationsendgerät mindestens ein zweites Kommunikationsendgerät durch eine erste im ersten Kommunikationsendgerät gespeicherte Adressinformation als Empfänger der Datenteile bestimmt wird.

## Beschreibung

Die Erfindung betrifft ein Verfahren von in einem Kommunikationsendgerät eingehenden Daten gemäß dem Oberbegriff des Anspruchs 1 sowie ein Kommunikationsendgerät gemäß dem Oberbegriff des Anspruchs 13.

Es sind Telekommunikationseinrichtungen bekannt, die es einem Anrufer ermöglichen, bei Abwesenheit des von ihm gewünschten Gesprächsteilnehmers eine Nachricht aufzusprechen bzw. in Form eines Textes oder einer Nummernnachricht abzulegen.

Im Allgemeinen handelt es sich hierbei um Kommunikationsendgeräte mit einem sogenannten Anrufbeantworter, der beispielsweise als Speichermedium einen Kassettenrecorder, digitalen Speicher oder vergleichbares aufweist.

Das Hinterlegen einer Nachricht wird im Allgemeinen bei Anrufbeantwortersystemen in einem Abwesenheitsmodus bzw. bei Eintreten einer vom Nutzer vorgegebenen Bedingung, beispielsweise bei Nichtabheben nach mehrmaligem Läuten oder bei ausgeschaltetem Handy, eingeleitet.

Üblich ist es dabei, dass der Anrufer durch eine Ansage darauf aufmerksam gemacht wird, dass er nach einem besonderen Ton eine Nachricht hinterlassen kann, wobei er dann, wenn es sich um Sprachnachrichten handelt, diese aufsprechen wird, wobei nach Aufsprechen einer Nachricht im allgemeinen durch Trennung der Verbindung die Aufzeichnung beendet wird.

Nach erfolgtem Aufzeichnen wird im Allgemeinen, das Vorhandensein einer Nachricht am Anrufbeantworter, beispielsweise durch Blinken einer Leuchtdiode, sofort angezeigt, so dass der Nutzer des Kommunikationsendgerätes bei Rückkehr die Nachrichten sofort in Kenntnis gesetzt wird und die Nachricht abhören kann.

Nachteilig hierbei ist, dass der Nutzer erst nach Rückkehr erfährt das neue Nachrichten gespeichert sind.

Anrufbeantwortersysteme stellen daher hierzu die Funktion einer Fernabfrage zur Verfügung bei dem der Nutzer über ein beliebiges weiteres Telekommunikationsendgerät nach Eingabe einer Identifikationsinformation Zugriff auf die gespeicherten Nachrichten erhält.

Nachteilig bei dieser Lösung ist, dass der Nutzer erst zu dem Zeitpunkt wenn er sein Kommunikationsendgerät abfrägt erfährt das Nachrichten vorhanden sind. Die Gefahr das terminbehaftete Anfragen versäumt, weil zuviel Zeit bis zur Abfrage verstrichen ist, wird daher besonders groß.

Zudem kann der Nutzer an das Kommunikationsendgerät versendete Textnachrichten nicht Abrufen, da es sich bei der Fernabfrage im Allgemeinen um eine Sprachverbindung handelt.

Die der Erfindung zugrundeliegende Aufgabe ist es ein Verfahren sowie Kommunikationsendgerät zum Melden von in einem Kommunikationsendgerät eingehender Daten anzugeben.

Diese Aufgabe wird ausgehend von dem im Oberbegriff des Patentanspruches 1 definierten Verfahren durch die im Kennzeichen des Patentanspruches 1 angegebenen Merkmale sowie von dem im Oberbegriff des Patentanspruchs 13 durch die im Kennzeichen des Patentanspruches 13 angegebenen Merkmale gelöst.

Bei dem erfindungsgemäßen Verfahren zur Meldung von in einem ersten Kommunikationsendgerät eingehenden Daten werden abhängig von der Herkunft der Daten zumindest Teile der Daten mit Hilfe eines Dienstes zur Übermittlung von Kurznachrichten an ein zweites Kommunikationsendgerät übermittelt, wobei in dem ersten Kommunikationsendgerät mindestens ein zweites Kommunikationsendgerät durch eine erste im ersten Kommunikationsendgerät gespeicherte Adressinformation als Empfänger der Datenteile bestimmt wird.

Durch das erfindungsgemäße Verfahren wird erreicht, dass ein Nutzer bei Entfernen von dem ersten Kommunikationsendgerät automatisch und unmittelbar nach Eingehen von Daten hierüber informiert wird, wobei er dazu lediglich mindesten eine Adressinformation, beispielsweise Rufnummer oder IP-Adresse, eines zweiten Kommunikationsendgerätes, dass der Nutzer bei sich trägt oder von dem er weiß, dass er sich in seiner Nähe aufhalten wird, in dem ersten Kommunikationsendgerät hinterlegen.

Die Funktion des Übermittelns eingehender Daten ist nicht immer erwünscht, so dass einem Nutzer durch das Einstellen eines Abwesenheitsmodus die Möglichkeit des Ein- und Ausschaltens der Funktion gegeben wird.

Wird mit dem Einstellen des Abwesenheitsmodus eine im ersten Kommunikationsendgerät implementierte Anrufbeantworterfunktion aktiviert, ist nur die Implementierung einer Einstellmöglichkeit erforderlich um zwei Funktionen auszulösen.

Vorteilhafterweise wird der Nutzer nur dann durch Übermittlung des Datenteils informiert, wenn tatsächlich ein Nachricht auf dem Anrufbeantworter hinterlegt, d.h. die Anrufbeantworterfunktion in Anspruch genommen worden ist, so dass Ressourcen zur Übermittlung effektiv genutzt werden können.

Wird der Datenteil bei Eingang einer Kurznachricht verschickt, wobei er zumindest den Inhalt der Kurznachricht enthält, erhält der Nutzer in Abwesenheit auch Kenntnis von eingehenden Kurznachrichten, insbesondere Textnachrichten.

Vorteilhafterweise enthält der Datenteil eine die Herkunft der eingehenden Daten kennzeichnende Adressinformation, insbesondere Rufnummer, so dass der Nutzer in die Lage versetzt wird den Urheber der Nachricht zu kontaktieren.

Eine einfache Realisierung des Verfahrens wird erzielt wenn, das erste Kommunikationsendgerät als ein stationäres Endgerät, beispielsweise Festnetztelefon oder eine, insbesondere gemäß DECT funktionierende, Basisstation funktioniert, und das zweite Kommunikationsendgerät als mobiles Endgerät, beispielsweise Funkempfänger "Pager", Personal Digital Assistant" PDA, schnurloses Telefon oder Mobilfunkendgerät, ausgestaltet wird, da diese mobilen Endgeräte im Allgemeinen von einer Person mit sich geführt wird, so dass eine Meldung über in das stationäre Endgerät eingegangene Daten im Wesentlichen an jedem beliebigen Ort empfangen werden kann, wobei diese mobilen Endgeräte auch über Einrichtungen verfügen um Zeichen, beispielsweise für Rufnummern oder Textnachrichten, darzustellen. Zudem stellen funktionieren die mobilen Endgeräte nach Kommunikationsstandards, die Dienste zur Übermittlung von Kurznachrichten zur Verfügung stellen wie beispielsweise bei gemäß dem "Global System Mobile" GSM-Standard funktionierenden Mobilfunkgeräten der "Short Message Service" SMS.

Um sicherzustellen, dass ein Nutzer in Abwesenheit nur über Anrufe informiert wird, deren Herkunft er feststellen kann, so dass ein Rückrufen möglich ist, wird der Datenteil bei Eingang eines Anrufs, der als Daten eine die Herkunft bestimmende, insbesondere gemäß "Calling Line Identification Presentation" CLIP übertragene, Rufnummer enthält.

Wenn der Datenteil in regelmäßigen, insbesondere einstellbaren, Zeitabständen übermittelt wird, lassen sich die im Zeitabstand eingegangenen Daten sammeln und gemeinsam übermitteln, so dass die Ressourcen effektiv genutzt und der Nutzer nicht seltener gestört, wobei hierzu auch nur eine Übermittlung erfolgt wenn tatsächlich zwischen zwei Übermittlungszeitpunkten Daten eingegangen sind.

Funktioniert der Dienst zur Übermittlung von Kurznachrichten gemäß dem "Short Message Service", so lassen sich neben numerischen Inhalten auch andere Inhalte versenden, wobei dies insbesondere mit Endgeräten, die gemäß GSM-Standard funktionieren, eine reibungslose Kommunikation erlauben. Zudem ist auch der Einsatz von SMS in Festnetzen gedacht, so dass keine aufwendige Umsetzung der über SMS empfangenen Daten erfolgen muss, sondern lediglich ein Weiterleiten.

Sind für den Abwesenheitsmodus Parameter einstellbar, die bei Eingang der Daten im ersten Kommunikationsendgerät für eine Überprüfung der Daten herangezogen werden und vom Ergebnis der Überprüfung abhängig eine Übermittlung stattfindet, kann ein Nutzer eine Art Filter einrichten, der gewährleistet, dass nur bestimmte Daten oder nur Daten bestimmter Herkunft weitergeleitet werden.

Wird zusätzlich abhängig vom Ergebnis eine Auswahl der ersten Adressinformation ermöglicht, so besteht die Möglichkeit eine Filter einzurichten, der die Daten gemäß ihrer Herkunft oder Ihres Inhalts an unterschiedliche zweite Kommunikationsendgeräte übermittelt. So lässt sich beispielsweise, wenn das erste Kommunikationsendgerät von mehreren Personen genutzt wird, von jeder dieser Person eine erste Adressinformation ablegen, so dass eingehende Daten abhängig von der Herkunft einer bestimmten Person gemeldet werden.

Des Weiteren kann durch Parameter der Abwesenheitsmodus für jede Person getrennt aktiviert und eingestellt werden.

Das erfindungsgemäße Kommunikationsendgerät weist eine erste Selektionseinrichtung, die derart ausgestaltet ist, dass abhängig von der Herkunft der Daten zumindest Teile der Daten mit Hilfe eines Dienstes zur Übersendung von Kurznachrichten an ein zweites Kommunikationsendgerät übermittelt werden, wobei eine zweite Selektionseinrichtung, die derart ausgestaltet ist, dass die eine erste im ersten Kommunikationsendgerät gespeicherte Adressinformation zum Bestimmen eines zweiten Kommunikationsendgeräts als Empfänger der Datenteile ausgewählt wird.

Das Kommunikationsgerät ermöglicht eine Verwaltung eingehender Daten, dahingehen, dass ein Nutzer in seiner Abwesenheit von eingehenden Daten und ggf. deren Inhalt informiert wird, wobei hierzu beispielsweise ein Übermitteln von Teilen der Daten abhängig davon ob eine Herkunftsadresse bekannt ist oder welcher Herkunft versendet wird.

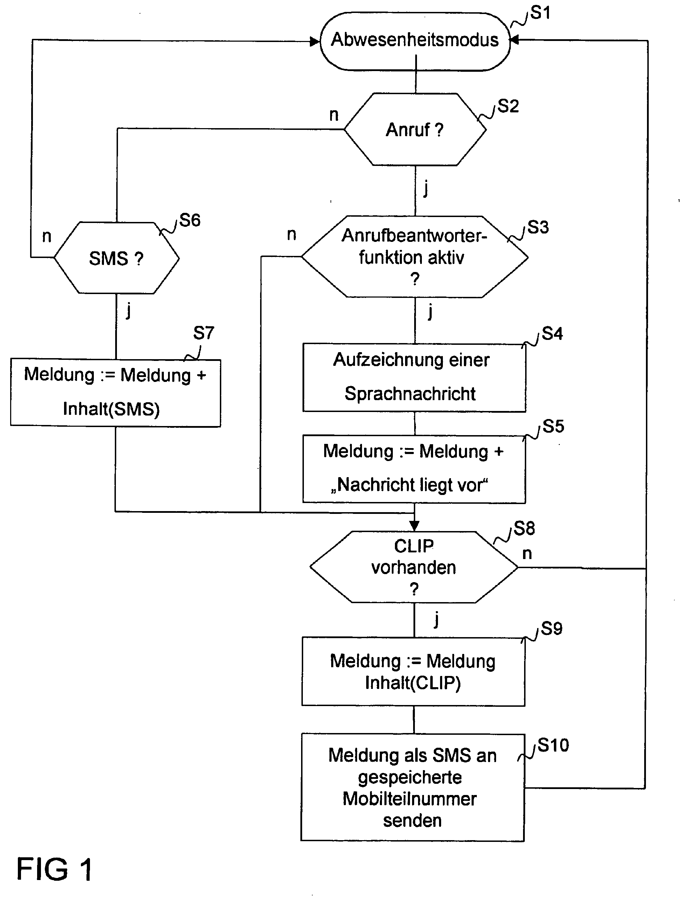

Ein Ausführungsbeispiel der Erfindung wird anhand der FIGUR 1 und FIGFUR 2 erläutert. Davon zeigt:
- FIGUR 1: ein Ablaufdiagramm des erfindungsgemäßen Verfahrens,
- FIGUR 2: ein Anordnung mit dem erfindungsgemäßen Kommunikationsendgerät.

In der Figur 1 ist ein Ablaufdiagramm dargestellt, welches eine Ausführungsform des erfindungsgemäßen Verfahrens zur Meldung von in einem ersten Kommunikationsendgerät eingehenden Daten zeigt.

Das Verfahren kommt zum Einsatz, wenn sich das Kommunikationsgerät in einem Abwesenheitsmodus oder dann wenn andere vom Nutzer eingestellte Bedingungen erfüllt sind.

In einem ersten Schritt S1 befindet sich ein erstes Kommunikationsendgerät in einem Abwesenheitsmodus, der von einem Besitzer des Kommunikationsendgerätes eingestellt worden ist.

Alternativ kann hier, beispielweise bei Nutzung des ersten Kommunikationsendgerätes durch mehrere Personen eine für jede Person individuelle Abwesenheitsregelung, durch Setzen entsprechender Parameter, eingestellt werden.

Geht in diesem Zustand eine Verbindungswunsch ein und kommt eine Verbindung zustande, wird zunächst in einem zweiten Schritt S2 geprüft, ob es sich dabei um einen Anruf handelt.

Ist dies der Fall, wird in einem dritten Schritt S3 geprüft, ob eine evtl. vorhandene Anrufbeantworterfunktion aktiv ist, so dass dem Anrufer in einem vierten Schritt S4 die Aufzeichnung einer Nachricht anbietet und durchführt.

Nach Erfolgen einer Aufzeichnung, wird der Inhalt der an den abwesenden Nutzer zu übermittelnden Meldung über den Eingang von Daten in einem fünften Schritt S5 zusammengesetzt. Dazu wird beispielsweise eine Kurznachricht mit dem Text "Nachricht liegt vor" erstellt.

Falls die Überprüfung im zweiten Schritt S2 ergibt, dass kein Anruf vorliegt, wird in einem sechsten Schritt S6 untersucht, ob mit bei der vorliegenden Verbindung eine SMS übermittelt wurde.

Ist dies der Fall wird in einem siebten Schritt S7 der Inhalt der an den abwesenden Nutzer zu übermittelnden Meldung über den Eingang derart zusammengesetzt, dass der Inhalt der eingegangenen SMS als Teil der Meldung aufgenommen wird.

Im Anschluss des fünften Schrittes S5 sowie siebten Schrittes S7 wird in einem achten Schritt S8 überprüft, ob die Herkunft des Verbindungswunsches durch Übermittlung der Rufnummer gemäß CLIP-Verfahren feststellbar ist, so dass diese Herkunft in einem neunten Schritt S9 als Inhalt zu dem im fünften Schritt S5 und im siebten Schritt S7 als Teil der Meldung aufgenommenen Inhalt bzw. falls es sich um keine SMS oder Sprachnachricht sondern lediglich um einen Anruf gehandelt hat, als einzige Information in die Meldung aufgenommen wird.

Ist keine Rufnummer mittels CLIP übermittelt worden, geht das Verfahren aus dem neunten Schritt S9 ohne Übersenden einer Meldung in den Ausgangszustand im ersten Schritt S1 über, da in diesem Ausführungsbeispiel, das Vorhandensein einer Rufnummerninformation, unabhängig von der Art der bei der Verbindung eingegangenen Daten, als wesentlicher Teil der Meldung betrachtet wird.

Alternativ ist es jedoch möglich, dass von einer Übermittlung einer Meldung im Falle des Fehlens einer Rufnummernkennung nur dann abgesehen wird, wenn es sich lediglich um einen Anruf gehandelt hat, da es keinen Sinn macht eine Meldung zu verschicken, dass es sich bei den eingegangenen Daten um einen Anruf handelt, der ohne Rufnummernkennzeichnung vorliegt, weil der Nutzer hierdurch keinen Vorteil, d.h. keine Möglichkeit eine sinnvolle Reaktion einzuleiten, hat.

Eine Übermittlung der Meldung erfolgt schließlich in einem zehnten Schritt S10, wobei die Meldung als SMS ausgestaltet beispielsweise an ein GSM-Mobilteil übertragen.

Alternativ ist es auch möglich die Meldung über einen Funkrufdienst wie "Cityruf" , "Euromessage" , "Inmarsat-Paging" oder "Ermes", d.h. an einen sogenannten Pager, zu übermitteln, wobei hierfür die Meldung ggf. gemäß eines anderen Dienstes zur Übermittlung von Kurznachrichten aufgebaut ist.

Die Erfindung soll nicht auf das beschriebene Ausführungsbeispiel, welches eine einfache Implementierung des erfindungsgemäßen Verfahrens darstellt, beschränkt sein. Vielmehr sind noch weitere Ausgestaltungsformen denkbar. Beispielsweise ist es möglich in einem von mehreren Personen genutzten ersten Kommunikationsendgerät ein Ausführungsbeispiel des erfindungsgemäßen Verfahrens zu implementieren, welches für jede Person separat einstellbar ist, so dass jede Person für sich einen Abwesenheitsmodus bzw. eine Bedingung, bei der eine Übermittlung einer Meldung erfolgen soll, einstellen kann. Da den Personen im Allgemeinen auch andere Mobilteil-Rufnummern zugeordnet sind, wird die eingestellten Bedingungen prüfend eine von mehreren möglichen Mobilteil-Rufnummern als Zieladresse für die Übermittlung der Meldung gewählt.

Des Weiteren ist es auch möglich eine Selektion derart vorzusehen, dass nur diejenigen eingehende Daten, die bestimmte, einstellbare, Bedingungen erfüllen zu einer Meldung führen, so dass eine Steigerung des Bedienkomforts durch individuelle Einstellmöglichkeiten gegeben ist, wobei diese Selektion durch Einstellung von Parametern angepasst wird, so dass eine variable Filterfunktion gewährleistet ist.

Ebenso ist die Erfindung nicht auf ein Verfahren beschränkt, sondern umfasst auch ein nicht dargestelltes Kommunikationsendgerät, welches zur Durchführung des Verfahrens ausgestallte Mittel aufweist, wie eine erste Selektionseinrichtung zur Bestimmung ob Datenteile übermittelt werden sollen oder eine zweite Selektionseinrichtung die, beispielsweise den Vorgaben des Nutzers entsprechend, die erste Adressinformation, welche das Endgerät bestimmt, auswählt. Darüber hinaus weist das Kommunikationsendgerät ggf. weitere Mittel zur Durchführung der vorteilhaften Weiterbildungen auf.

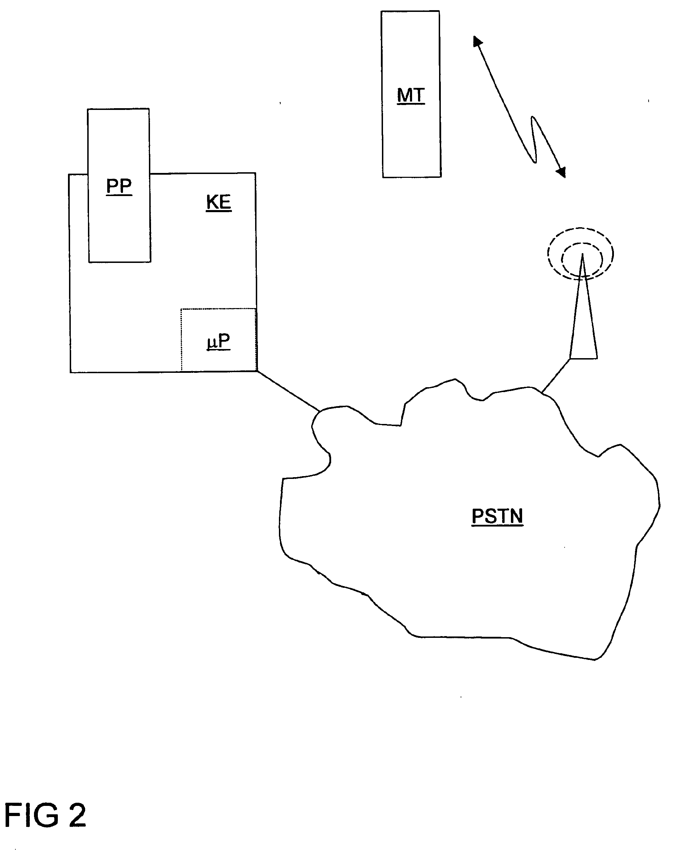

In FIGUR 2 eine Anordnung dargestellt, die sich aus dem erfindungsgemäßen Kommunikationsendgerät KE, welches an ein öffentliches Telekommunikationsnetz (Festnetz) PSTN angeschlossen ist, sowie einem Mobilteil MT zusammengesetzt ist.

Das Kommunikationsendgerät KE bei dem dargestellten Ausführungsbeispiel ist eine schnurlose Basisstation die gemäß dem "Digital European Cordless System" DECT-Standard funktioniert mit einem angemeldeten Schnurlos-Mobilteil PP, welches in der Ladeschale der Basisstation KE abgelegt ist, wobei die Basisstation KE derart ausgestaltet ist, dass es über das Festnetz PSTN gemäß dem aus dem "Global System Mobile" Standard GSM bekannten "Short Message Service" ausgestaltete Nachrichten übermitteln und empfangen kann.

Zudem ist es zur Auswertung von als "Calling Line Identification Presentation" CLIP übermittelten Rufnummern ausgestaltet und weist einen Rufnummernspeicher auf, der derart ausgestaltet ist, dass eine Rufnummer eines Endgerätes gespeichert werden kann, an welches Nachrichten über eingegangene Anrufe gesendet werden sollen.

Im Allgemeinen wird es sich dabei um ein mobiles Zweitgerät des Nutzers des erfindungsgemäßen Kommunikationsendgerätes handeln.

Gemäß dem dargestellten Ausführungsbeispiel ist das Endgerät das GSM Mobilteil MT. Alternativ kann es sich auch um einen entsprechend ausgestalteten "Personal Digital Assistant" PDA oder ein zum Empfang von SMS-Nachrichten ausgestaltetes Festnetztelefon handeln.

Bei dem dargestellten erfindungsgemäße Endgerät sind erste Selektionsmittel, mit denen festgestellt wird, ob ein CLIP enthaltender Ruf eingeht, sowie zweite Selektionsmittel, die bei Eingang eines derartigen Rufs, die in dem Rufnummernspeicher gespeicherte Rufnummer des Mobilteils MT, als Ziel für eine Nachricht über den Eingang des Rufs auswählen, in dem Mikroprozessor µP des Kommunikationsendgerätes integriert.

Die Erfindung soll aber nicht auf das dargestellte Ausführungsbeispiel beschränkt sein, vielmehr sollen auch zur Umsetzung der möglichen Weiterbildungen notwendige ergänzende bzw. alternative Einrichtung, insbesondere zur Durchführung der in Figur 1 beschriebenen Weiterbildungen und Alternativen des erfindungsgemäßen Verfahrens, sowie im Rahmen fachmännischen Könnens möglichen Modifikationen mit erfasst sein.

## Patentansprüche

1. Verfahren zur Meldung von in einem ersten Kommunikationsendgerät (KE) eingehenden Daten, **dadurch gekennzeichnet, dass**
a) abhängig von der Herkunft der Daten (S2, S8) zumindest Teile der Daten mit Hilfe eines Dienstes zur Übersendung von Kurznachrichten an ein zweites Kommunikationsendgerät (MT) übermittelt werden (S10), wobei
b) in dem ersten Kommunikationsendgerät (KE) mindestens ein zweites Kommunikationsendgerät (MT) durch eine erste im ersten Kommunikationsendgerät gespeicherte Adressinformation (S10) als Empfänger der Datenteile bestimmt wird.

2. Verfahren nach Anspruch 1, **dadurch gekennzeichnet, dass** die Übermittlung durch Einstellen eines Abwesenheitsmodus zuschaltbar ist (S1).

3. Verfahren nach Anspruch 2, **dadurch gekennzeichnet, dass** durch Einstellen des Abwesenheitsmodus eine im ersten Kommunikationsendgerät (KE) implementierte Anrufbeantworterfunktion aktiviert wird.

4. Verfahren nach Anspruch 3, **dadurch gekennzeichnet, dass** der Datenteil bei Inanspruchnahme der Anrufbeantworterfunktion seitens eines Anrufers übermittelt wird (S3, S4), wobei der Datenteil zumindest eine Information über die Inanspruchnahme enthält (S5, S10).

5. Verfahren nach einem der Ansprüche 1 bis 4, **dadurch gekennzeichnet, dass** der Datenteil bei Eingang einer Kurznachricht übermittelt wird (S6), wobei der Datenanteil zumindest den Inhalt der Kurznachricht (S7, S10) enthält.

6. Verfahren nach einem der Ansprüche 1 bis 5, **dadurch gekennzeichnet, dass** der Datenteil eine die Herkunft der Daten kennzeichnende Adressinformation enthält.

7. Verfahren nach Anspruch 1, **dadurch gekennzeichnet, dass**
a) das erste Kommunikationsendgerät (KE) als stationäres Endgerät, insbesondere Festnetzgerät oder Basisstation, funktioniert,
b) das zweite Kommunikationsendgerät (MT) als mobiles Endgerät, insbesondere als Funkrufempfänger "Pager", "Personal Digital Assistant" PDA, schnurloses Telefon oder Mobilfunkendgerät, ausgestaltet wird.

8. Verfahren nach einem der vorhergehenden Ansprüche, **dadurch gekennzeichnet, dass** der Datenteil bei Eingang eines Anrufs, der als Daten eine die Herkunft des Anrufs bestimmende, insbesondere gemäß "Calling Line Identification Presentation" CLIP übertragene, Rufnummer enthält, übermittelt wird (S8), wobei der Datenteil als Information zumindest die Rufnummer (S9) enthält.

9. Verfahren nach einem der vorhergehenden Ansprüche, **dadurch gekennzeichnet, dass** der Datenteil in regelmäßigen, insbesondere einstellbaren, Zeitabständen übermittelt wird, wobei der Datenteil zumindest Informationen zu allen zwischen zwei Übermittlungen eingegangenen Daten enthält.

10. Verfahren nach Anspruch 1 oder 2, **dadurch gekennzeichnet, dass** der Dienst gemäß dem "Short Message Service" SMS (S10) funktioniert.

11. Verfahren nach einem der vorhergehenden Ansprüche, **dadurch gekennzeichnet, dass**
a) für den Abwesenheitsmodus (S1) Parameter einstellbar sind,
b) bei Eingang der Daten im ersten Kommunikationsendgerät (KE) eine Überprüfung (S2, S3, S6, S8) der Daten auf Basis der Parameter durchgeführt wird,
c) abhängig vom Ergebnis der Überprüfung die Übermittlung (S10) aktiviert wird.

12. Verfahren nach einem der vorhergehenden Ansprüche, **dadurch gekennzeichnet, dass**
a) für den Abwesenheitsmodus Parameter einstellbar sind,
b) bei Eingang der Daten im ersten Kommunikationsendgerät (KE) eine Überprüfung der Daten auf Basis der Parameter durchgeführt wird,
c) abhängig vom Ergebnis der Überprüfung eine erste Adressinformation gewählt wird.

13. Kommunikationsendgerät (KE), **gekennzeichnet durch**
c) eine erste Selektionseinrichtung (µP), die derart ausgestaltet ist, dass abhängig von der Herkunft der Daten zumindest Teile der Daten mit Hilfe eines Dienstes zur Übersendung von Kurznachrichten an ein zweites Kommunikationsendgerät (MT) übermittelt werden, wobei
d) eine zweite Selektionseinrichtung (µP), die derart ausgestaltet ist, dass eine erste im Kommunikationsendgerät (KE) gespeicherte Adressinformation zum Bestimmen eines zweiten Kommunikationsendgeräts (MT) als Empfänger der Datenteile ausgewählt wird.
